Europäisches Patentamt

European Patent Office

Office européen des brevets

(19)

(11) Publication number : **0 068 787**
**B1**

(12) **EUROPEAN PATENT SPECIFICATION**

(45) Date of publication of patent specification :
26.09.84

(51) Int. Cl.³ : **C 09 C   1/34, C 01 G 37/02**

(21) Application number : **82303233.9**

(22) Date of filing : **22.06.82**

(54) **Preparation of pigment grade chromium oxide.**

(30) Priority : 24.06.81 US 276735

(43) Date of publication of application :
05.01.83 Bulletin 83/01

(45) Publication of the grant of the patent :
26.09.84 Bulletin 84/39

(84) Designated contracting states :
**DE FR GB**

(56) References cited :
GB-A- 2 012 739
US-A- 2 250 789
US-A- 4 207 295

(73) Proprietor : **PFIZER INC.**
**235 East 42nd Street**
**New York, N.Y. 10017 (US)**

(72) Inventor : **Rao, Velliyur-Nott Padmanabha**
**511 Farmview Drive**
**Easton Pennsylvania (US)**

(74) Representative : **Moore, James William**
**Pfizer Limited Ramsgate Road**
**Sandwich Kent CT13 9NJ (GB)**

## Description

The present invention is concerned with a method of producing pigment grade chromium oxide from non-pigment grade chromium oxide. In the past, numerous methods have been used to produce chromium oxide pigment but it is the present invention that for the first time converts low cost, non-pigment grade chromium oxide to a more valuable pigment grade chromium oxide.

U.S. Patent 2,560,338 (Frayne) discloses a process involving the reduction of sodium dichromate or chromate with sodium thiosulfate and then calcining the reduced product. U.S. Patent 2,659,215 (Pollock) teaches a process involving the reduction of sodium chromate or dichromate with sodium sulfate followed by pH adjustment and calcination of the reduced product. Both of these patents teach processes in which chromate is reduced by sulfur compounds and they both result in the production of large amounts of soluble salts that must be removed from the mixture. In addition, when calcining such a mixture, there is evolution of undesirable $SO_2$. Both are multi-step processes which are complicated and difficult to control.

U.S. Patent 2,250,789 (Ayers) teaches a process for producing chromium oxide pigment by the intimate mixing of anhydrous chromic acid and a small percentage of a carbonate of an alkali metal, calcining the mixture between 871 and 1,204 °C (1,600 and 2,200 °F) and washing and drying. The teachings of this patent are impractical in that the chromic acid used is corrosive and destructive to equipment. The resulting product is dark in color and there is poor control over the shade of green pigment obtained.

U.S. Patent 4,040,860 (Mansmann) discloses a process for producing chromium oxide green pigment by dry mixing sodium dichromate dihydrate with ammonium sulfate or chloride and water, heating the resulting mixture for about 15 minutes at a temperature of about 800-1,100 °C, and separating the formed pigment from the salts. This process uses large quantities of ammonium salts to satisfy the stoichiometric requirement of the reaction. Other additives such as wood powder, starch, ligin, boric acid, or borates are optionally added to change the color of the chromium oxide pigment.

U.S. Patent 2,278,872 (Geary) teaches a process for preparing a ceramic pigment comprising calcining a base mixture including compounds of chromium and antimony in the presence of a sulfate to improve the color characteristics of the pigments. The process always involves mixtures of both antimony and chromium and the resulting pigments are in the yellow-brown hues for specific use in coloring ceramics.

It is known that thermal treatment of a crystalline material results in crystal growth. In general, the more severe the thermal treatment, the larger the crystal growth will be, but there is not sufficient control over crystal growth by temperatures alone. It was thought that additional control could be achieved by heating the crystalline material in the presence of anti-sintering agent. In this case, such an agent would have to produce controlled growth since in chromium oxide crystal size and uniformity determine pigment characteristics. It would also have to be non-reactive and water-soluble so that it can be removed easily. Several well known anti-sintering agents were calcined with low-grade chromium oxide and little improvement in control of crystal growth (and hence pigment characteristics) occured. The agents tried were chromium hydroxide, sodium chloride, sodium aluminate, sodium borate and sodium ortho vanadate. Sodium sulfate, of the agents tried, resulted in the best control of crystal growth and improved color characteristics.

The present invention claims a process for the preparation of pigment grade chromium oxide comprising calcining non-pigment grade chromium oxide in the presence of at least 1.0 weight percent sodium sulfate, washing the calcined mixture to remove said sodium sulfate and recovering said pigment grade oxide. Preferred embodiments of the invention include the process wherein the amount of sodium sulfate is from about 2-5 weight percent, wherein the calcination temperature is from about 925-1,200 °C, wherein the non-pigment grade oxide is in the form of a dry powder, and wherein the sodium sulfate in dry form is combined with the non-pigment grade oxide prior to calcination. The pigment grade oxide prepared by the process of this invention is also claimed.

The process of the present invention can be described in general terms as follows. Non-pigment grade chromium oxide is calcined in the presence of at least 1 weight percent sodium sulfate. The non-pigment grade chromium oxide may be in the form of a dry powder. It is believed that the non-pigment grade oxide can also be used in the form of a wet filter cake providing that proper adjustments are made in the process conditions. The sodium sulfate may be in the form of a dry powder or a solution. The mixture is then calcined at a temperature of at least about 925 °C. The calcined material is washed in water to remove the sodium sulfate and the final product is recovered, generally by filtration and drying. The resulting product may be milled to deagglomerate and optionally roll-milled to a final pigment grade product. It is also possible to re-slurry the washed material in water for use directly as a colorant in aqueous systems thus eliminating the drying and deagglomerating step.

Alternatively, depending upon the process by which the non-pigment chromium oxide is prepared, substantial amounts of sodium sulfate may already be present. In this case it will be possible to adjust the amount of sodium sulfate present to the proper level. The preparation of non-pigment grade chromium oxides suitable as starting materials for the present invention is described in UK Patent 2,012,739 and U.S. Patent 4,052,225. These chromium oxides exhibit poor color characteristics when compared to typical pigment grade oxide (Pfizer G-4099). The starting material is significantly less green, less yellow and darker as shown in the table to follow. This is related to the small particle size of the starting material, for example, particle sizes ($d_{50}$) of less than 0.4 $\mu$m as measured on a Sedigraph 5,000-D Particle Size Analyzer are common. The process of this invention will bring about a controlled increase in particle size and a corresponding improvement in color quality in a wide variety of small particle, non-pigment grade oxides.

The pigment product resulting from the novel process of the present invention exhibits outstanding pigment properties. For example, the color quality (mass tone) of a given shade of green pigment of the instant invention is at least as good with respect to cleanness and brightness as other commercially available pigments. Tinting strength of the materials of the present invention was evaluated and found to be at least as good as that of commercial pigment. The shade of the color can be controlled by the use of this invention. The color quality (mass-tone) of the products resulting from the instant invention is compared to the starting material using commercially available chromium oxide pigment as the standard in the following table.

Table 1

|  | Delta Red/Green | Delta Yellow/Blue | Delta Lightness | Delta E |
|---|---|---|---|---|
| Precursor | +6.4 | −4.1 | −0.2 | +7.6 |
| Invention Material Example 1A | −0.5 | −0.6 | +3.5 | +3.6 |
| Invention Material Example 1C | −0.4 | +0.6 | +2.4 | +2.5 |

In the above table, the chromium oxide pigment of the instant invention and the precursor chromium oxide starting material are compared using a light shade commercially available chromium oxide pigment (Pfizer G-4099) as the standard. The products of the instant invention are more green (more negative red-green), more yellow (less negative yellow-blue) and lighter (higher lightness value) than the precursor. A lower delta-E indicates similarity to the standard and hence, in this case, the materials of the invention are more similar to the commercial pigment than is the precursor. These color comparisons indicate that the invention material is improved in the desired directions and will be suitable for use as pigment grade chromium oxide whereas the precursor is not suitable.

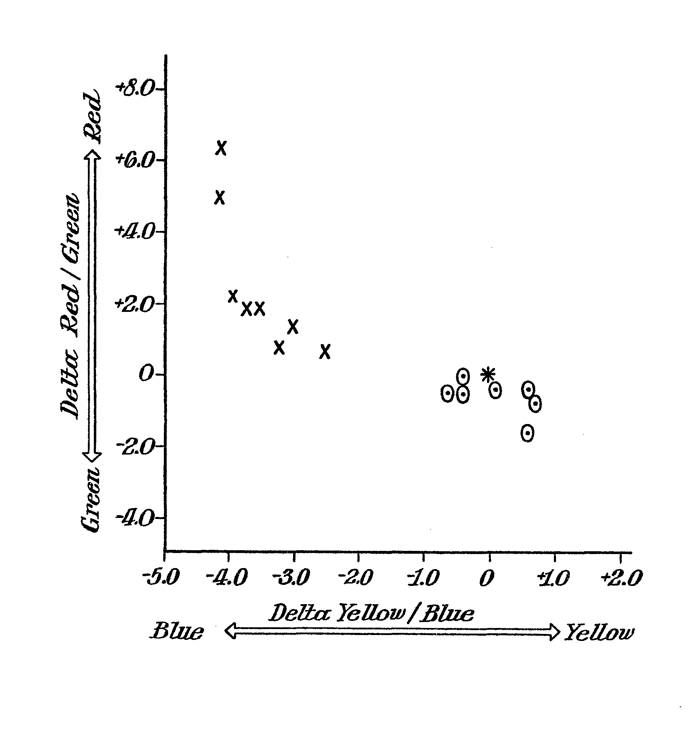

In the Figure, precursor materials are indicated by X's and are seen on the left side. Final products are indicated by circles and are seen to the right of the Figure. The asterisk at the zero position on both scales indicates the color values of the light shade commercial chromium oxide (Pfizer G-4099) used as the standard for comparison. It can be seen that the final products are clustered near the standard while the starting materials have color values which place them far from the standard. The starting materials are thus shown to be unsuitable as pigment while the final products have been improved so that they are suitable as pigments. It can be seen that these starting materials have delta red-green values of greater than about + 0.3 and delta yellow-blue values of less than zero while the final products (taken from the examples to follow) have delta red-green values less than zero and delta yellow-blue values of greater than about − 0.6. The Figure demonstrates that the starting material has been improved in the desired directions, especially in the yellow direction.

In the experiment represented in the Figure the object was to produce a light shade chromium oxide pigment. It should be appreciated that if other shades are desired other standards will be employed. The improvement in the color values of the final products will always be in the same directions no matter what standard is employed.

The color measurements are made in a known manner according to standard methods published by the American Society for Testing and Materials, Philadelphia, Pennsylvania (ASTM D-2244-79 using the FMC II color equation ASTM E-308-66 on a Diano-Hardy Spectrophotometer).

The color measurements are made on a dried 6 mm draw down prepared as follows :

Mass-tone — 1 gram of pigment is mixed with a dispersing oil in a Hoover muller. Then 10 grams of nitrocellulose laquer is added and the sample is mixed well. Tint — 0.5 grams of pigment and 1.5 grams of titanium dioxide is mixed with a dispersing oil in a Hoover muller. Then 10 grams of nitrocellulose laquer is added and the sample is mixed well. Six mm wet draw downs are then made of both mass tone and tint dispersions on Morest White Cards and left to dry.

Since mass-tone measurements are always comparisons, it is necessary to use some chromium oxide as a standard. In this application Pfizer Commercial Chromium Oxide Pigment G-4099 has been used as the standard when comparing the products of the invention to the starting material. When comparing the products of this invention to commercial pigment oxides, the starting material non-pigment grade oxide was used as the standard. The designation « delta » has its usual significance ; i. e. « a change in » a value.

A preferred process according to the instant invention is one in which the non-pigment grade starting material which has a delta red-green as high as about + 5.0 as compared to Pfizer G-4099 commercial chromium oxide, is mixed with from 2.0 to 5.0 weight percent sodium sulfate in dry form. The mixture is then calcined continuously at a temperature of from about 925 to 1,200 °C. The mixture is then slurried in water and the pigment product is recovered by filtering, washing to remove the sodium sulfate, and drying. The dried filter cake is milled to deagglomerate.

The examples to follow are illustrative.

## Example 1-A

5 grams of sodium sulfate was dry blended with 100 grams of non-pigment grade chromium oxide with a mortar and pestle. 20 grams of the resulting mixture was placed in a muffle furnace at 982 °C for 30 minutes. The calcined product was cooled, slurried in water, filtered, washed, and dried.

## Example 1-B

10 grams of sodium sulfate was dry blended with 100 grams of non-pigment chromium oxide with a mortar and pestle. 20 grams of the resulting mixture was placed in a muffle furnace at 982 °C for 30 minutes. The calcined product was cooled slurried in water, filtered, washed, and dried.

## Example 1-C

5 grams of sodium sulfate was dry blended with 200 grams of non-pigment grade chromium oxide in a mortar and pestle. 20 grams of the resulting mixture was placed in a muffle furnace at 1,038 °C for 30 minutes. The calcined product was cooled, slurried in water, filtered, washed, and dried.

## Example 1-D

The procedure of Example 1-C was repeated except that the calcination of the sodium sulfate treated product was performed for 30 minutes at 1,093 °C.

## Example 2

1 gram of sodium sulfate was dry blended with 100 grams of non-pigment grade chromium oxide with a mortar and pestle. Three separate 20 gram samples of the resulting mixture were placed in a muffle furnace for 30 minutes at 982 °C (A), 1,038 °C (B) and 1,093 °C (C).

## Example 3

| Example No. | Delta Red-Green | Delta Yellow-Blue | Delta Lightness |
|---|---|---|---|
| 1-A | -7.4 | 3.7 | 3.7 |
| 1-B | -7.4 | 3.9 | 4.0 |
| 1-C | -7.2 | 4.7 | 2.6 |
| 1-D | -7.2 | 4.7 | 0.8 |
| 2-A | -6.9 | 3.8 | 3.7 |
| 2-B | -7.4 | 4.2 | 2.9 |
| 2-C | -8.1 | 4.6 | 0.3 |
| Pfizer G-4099 Commercial Chromium Oxide | -6.3 | 3.9 | 0.2 |

In this example, the preceding Examples 1 and 2 and Pfizer commercial Oxide G-4099 are compared using the precursor chromium oxide (starting material before sodium sulfate treatment) as the standard. In the Examples and G-4099 the delta red/green is negative indicating a greener (higher chroma) product than the precursor. The Examples and G-4099 are more yellow and lighter than the starting material thus showing the desired improvement over the non-pigment grade starting material in the products of the Examples and also demonstrating that they are similar to commercial G-4099 in color characteristics.

4

# 0 068 787

## Example 4

| Example No. | Delta Red-Green | Delta Yellow-Blue | Delta Lightness |
|---|---|---|---|
| Precursor Oxide | 6.4 | -4.1 | -0.2 |
| 1-A | -0.5 | -0.6 | 3.5 |
| 1-B | -0.5 | -0.4 | 3.8 |
| 1-C | -0.4 | 0.6 | 2.4 |
| 1-D | -0.7 | 0.7 | 0.6 |
| 2-A | 0.0 | -0.4 | 3.5 |
| 2-B | -0.6 | 0.1 | 2.7 |
| 2-C | -1.6 | 0.6 | 0.2 |

In this example, the precursor oxide and the products of Examples 1 and 2 are compared using Pfizer commercial chromium oxide pigment G-4099 as the standard. The Examples are shown to be more negative in the delta red-green measurement (indicating more green) and more positive in the delta yellow-blue (indicating more yellow) and they have a higher delta lightness value than the precursor oxide.

## Claims

1. A process for the preparation of pigment grade chromium oxide comprising calcining non-pigment grade chromium oxide in the presence of at least 1.0 weight percent sodium sulfate, washing the calcined mixture to remove said sodium sulfate and recovering said pigment grade oxide.

2. The process of claim 1, wherein the amount of sodium sulfate is from 2 to 5 weight percent.

3. The process of claim 1, wherein the calcination temperature is from 925 to 1,200 °C.

4. The process of claim 1, wherein the non-pigment grade chromium oxide is in the form of a dry powder.

5. The process of claim 1, wherein sodium sulfate in dry form is combined with said non-pigment grade chromium oxide prior to calcination.

6. The product prepared according to claim 1.

## Ansprüche

1. Verfahren zur Herstellung eines Chromoxids von Pigmentgüte, wobei ein Chromoxid von Nicht-Pigmentgüte in Anwesenheit von mindestens 1,0 Gew.-% Natriumsulfat kalziniert wird, die kalzinierte Mischung gewaschen wird um das Natriumsulfat zu entfernen und das Oxid von Pigmentgüte gewonnen wird.

2. Verfahren gemäß Anspruch 1, worin die Menge an Natriumsulfat 2 bis 5 Gew.-% beträgt.

3. Verfahren gemäß Anspruch 1, worin die Kalzinierungstemperatur 925 bis 1 200 °C beträgt.

4. Verfahren gemäß Anspruch 1, worin das Chromoxid von Nicht-Pigmentgüte in Form eines trockenen Pulvers vorliegt.

5. Verfahren gemäß Anspruch 1, worin das Natriumsulfat in trockener Form mit dem Chromoxid von Nicht-Pigmentgüte vor der Kalzinierung kombiniert wird.

6. Das Produkt hergestellt gemäß Anspruch 1.

## Revendications

1. Procédé de préparation d'oxyde de chrome de qualité pigmentaire, consistant à calciner de l'oxyde de chrome de qualité non pigmentaire en présence d'au moins 1,0 % en poids de sulfate de sodium, à laver le mélange calciné pour éliminer ledit sulfate de sodium et à recueillir ledit oxyde de qualité pigmentaire.

2. Procédé suivant la revendication 1, dans lequel la quantité de sulfate de sodium va de 2 à 5 % en poids.

3. Procédé suivant la revendication 1, dans lequel la température de calcination va de 925 à 1 200 °C.

4. Procédé suivant la revendication 1, dans lequel l'oxyde de chrome de qualité non pigmentaire est sous la forme d'une poudre sèche.

5. Procédé suivant la revendication 1, dans lequel le sulfate de sodium sous la forme sèche est associé audit oxyde de chrome de qualité non pigmentaire avant la calcination.

6. Le produit préparé conformément à la revendication 1.

5

Delta Yellow / Blue

Blue

Yellow

Delta Red / Green

Red

Green

+8.0

+6.0

+4.0

+2.0

0

-2.0

-4.0

-5.0

-4.0

-3.0

-2.0

-1.0

0

+1.0

+2.0